Europäisches Patentamt

(19) European Patent Office

Office européen des brevets

(11) EP 0 957 526 A1

(12) EUROPEAN PATENT APPLICATION
published in accordance with Art. 158(3) EPC

(43) Date of publication:
17.11.1999 Bulletin 1999/46

(21) Application number: 96906929.3

(22) Date of filing: 22.03.1996

(51) Int. Cl.$^6$: **H01M 10/40**, H01M 10/44, H01M 10/46, H01M 2/02, G06F 15/02, G06F 3/033, G06F 1/26

(86) International application number:
PCT/JP96/00759

(87) International publication number:
WO 97/36337 (02.10.1997 Gazette 1997/42)

(84) Designated Contracting States:
DE FR GB

(71) Applicant: Hitachi, Ltd.
Chiyoda-ku, Tokyo 101 (JP)

(72) Inventors:
• MOMOSE, Hideto
Hitachi-shi,Ibaraki 316 (JP)
• NISHIMURA, Katsunori
Ibaraki 313 (JP)
• IKAWA, Kyoko
Hitachi-shi,Ibaraki 316 (JP)
• MURANAKA, Yasushi
Ibaraki 312 (JP)
• KOZONO, Yuzo
Ibaraki 313 (JP)

(74) Representative:
Beetz & Partner
Patentanwälte
Steinsdorfstrasse 10
80538 München (DE)

(54) **LITHIUM SECONDARY CELL, CHARGER, AND DEVICE FOR INFORMATION TERMINAL**

(57) A chargeable battery easy to handle and superior in portability as a power supply for a portable information terminal device, as well as an information terminal device using the battery and an efficient and safe charger, are to be provided.

As a chargeable battery which satisfies the above-mentioned object there is provided a flat plate-like lithium secondary battery having a discharge capacity of 8 Wh or more in the battery voltage range of 4.2V to 3.2V and having a thickness of 5 mm, a diagonal length of 100 to 130 mm, namely, a diagonal length of 20 times or more as large as the thickness. In this lithium secondary battery, a carbon material with fine metallic particles carried thereon is used as an active material of negative electrode. To prevent the expansion of electrodes in a long-term use, the battery container used is enclosed with a material having a Young's modulus of 20 newtons or more per square meter, thereby enhancing the adhesion between electrodes and prolonging the battery life.

FIG. 1

EP 0 957 526 A1

## Description

Technical Field

The present invention relates to a lithium secondary battery, as well as a charger for the battery and an information terminal device using the battery. More particularly, the invention is concerned with an improvement of the shape of a lithium secondary battery and of how to use the battery, with the intention of improving operability.

Background Art

Recently, a lithium secondary battery has been in the spotlight as a light-weight and compact secondary battery. The lithium secondary battery capable of affording a high energy density is utilized in various fields. Particularly, for the power supply in electronic information devices such as portable computers and portable telephones, the lithium secondary battery is coming into wide use in quick tempo. The lithium secondary batteries now available on the market can be classified by their shapes into coin type, cylindrical type, square type, and pack type. The coin type, as the name implies, is a small disc-shaped battery whose capacity is not so large, and therefore the use thereof is limited to memory back-up use or the like. The cylindrical type comprises a positive electrode and a negative electrode, both electrodes being wound up around a winding shaft and accommodated in a cylindrical container. At present, the cylindrical type is manufactured in the largest number. The cylindrical type is advantageous in that pressure is applied uniformly to the electrodes because of winding of the electrodes and that therefore even after the use of the battery over a long period there scarcely occurs deterioration of the battery caused by deterioration in the adhesion between the electrodes. The square type usually indicates a rectangular shape of a battery container constituted by a combination of planes. In terms of how to accommodate electrodes in the container, the square type is classified into a winding type and lamination type. The square type is advantageous in that the thickness can be made smaller than in the cylindrical type when the battery capacity is increased. The thinnest lithium secondary battery now available commercially is 6.4 mm in thickness. The pack type is such that a plurality of cylindrical or square type batteries are packed into a single container and are connected in series or in parallel in the container, thus affording a battery pack of a large voltage or capacity. Many of the information devices available at present employ packed battery of a large capacity as the power supply.

As to the charger, charging is usually started automatically upon connection of a battery to the charger. Various methods and combinations thereof are available for controlling the charging current. As means for advising the user of the end of charging there is adopted a method using an indicating mechanism which causes an indicator lamp to go on or off or go on and off.

Information terminal devices using a lithium secondary battery, especially those provided with elements which require a somewhat large, two-dimensionally expanded area on the device, such as a liquid crystal display and a pen input element, tend to become smaller in thickness for the improvement of portability. Further, with functional advance and diversification of information terminal devices, there is a tendency such that daily uses of the devices expand, the frequency of use increases up to the same level as stationery, a continuous working time becomes longer, a portable use becomes common, and the opportunity of using the devices with battery alone increases at places where a plug socket is not available nearby.

In view of such a series of tendencies, a large capacity is first required of the battery. However, a limit is encountered in the volume and weight of the battery in an information terminal device, and if the battery is to be used for a long time, there arises the necessity of carrying a spare battery. In the case where a lithium secondary battery is to be carried together with an information terminal device, the portability of the battery is poor because the thickness of the battery is large and close to that the device, the shape thereof is therefore like a lump, and hence the battery is bulky. For example, when the battery is put into a pocket of clothes, its large thickness causes the pocket to swell and makes it conspicuous, resulting in that the clothes get out of shape. Also when the battery is held in a file or the like which is used for carrying simple documents for a conference, the large thickness thereof offends the eye. On the premise that a replacement battery is carried together with an information terminal device and that the device is used for a long time while replacing the used battery with the replacement battery, it is a subject of the present invention to provide a battery easy to handle and an information terminal device capable of using the said battery. It is also a subject of the invention to reduce the weight of the battery on the premise that the battery is to be used as a portable battery. Further, in the case of a secondary battery for replacement, it is repeatedly used many times, so it is an important subject to provide a structure capable of retaining the adhesion of electrodes.

For the battery charger, improvement of its operability is an important subject, which is also required of information terminal devices. Besides, since the battery in question premises replacement, a plurality of used batteries arise after a series of uses, so it is a subject to charge them efficiently. In the conventional charger, after the end of charging is indicated with an indicator or the like, the charging current is turned OFF by control using a circuit. At this time, the battery remains connected to the charger. Unless the battery is disconnected from the charger, the power supply of the charger will again turn ON after it has been turned OFF. Thus, upon restart-up, charging will start again. Usually, a check is made for the battery voltage, etc. at the beginning of charging and therefore a charged battery is no longer charged, leading to the end of charging. However, in a certain inspection method, a slight charging current is flowed to check the resulting change in voltage. Therefore, also from the standpoint of avoiding overcharge of a charged battery, it is a subject to prevent a charged battery from being charged again after restart-up of the charger.

Disclosure of Invention

The above subject of providing a battery of a shape easy to handle can be attained by providing a battery having a flat plate-like shape and comprising a battery container filled with an active electrode material which can store an electric power of 8 Wh or more in the battery voltage range of 4.2V to 3.2V, the battery container having an external size such that the thickness is within 5 mm and a diagonal length of a planar portion is not less than 100 mm and not more than 130 mm. In other words, the battery in question is a flat battery having a diagonal length twenty times as large as the thickness thereof. The above dimensional range is equal to that of 3.5 inch floppy disk, MO disk and Zip disk which are used in information terminal devices. In carrying the battery, it is possible to use the same carrying tools as those recording media. Besides, since the battery is flat, even if plural such batteries are stacked together, stability is ensured. Even in the case of using the battery on a desk, convenience is ensured. Also in mounting the battery to a thin information terminal device, an easy replacement of the battery can be done merely by insertion and taking out of the battery into and out of an insertion port, like the recording media.

This flat battery can be manufactured by limiting the number of alternately laminated layers of positive and negative electrodes. In the case of adopting the method of winding positive and negative electrodes, the battery in question can be manufactured by limiting the number of windings. Wound-up electrodes are effective in prolonging the cycle life because the residual tension of the electrodes retain the adhesion of the electrodes. As an active material of positive electrode in the lithium secondary battery in question there is used a material containing a nickel compound and having a weight volume density of 150 Ah or more per kilogram, while as an active material of negative electrode is used a material having a weight capacity density of 300 Ah or more per kilogram, whereby with the battery of the above volume there is obtained a discharge capacity of 8 Wh or more in the battery voltage range of 4.2V to 3.2V. In the case of using as an active material of positive electrode a material containing a manganese compound and having a weight capacity density of 90 Ah or more per kilogram, if a material having a weight capacity density of 600 Ah or more per kilogram is used as an active material of negative electrode, then with the battery of the above volume there is obtained a discharge capacity of 8 Wh or more in the battery voltage range of 4.2V to 3.2V. Being light weight, which is important in arguing portability, is attained by using a material of a small specific gravity such as aluminum or plastic material as the material of the battery container used. When the adhesion between electrodes is deteriorated after a long-term use, the battery performance is deteriorated. In such a flat battery as that of the present invention, the said problem is serious particularly at the central part of its planar portion. In view of this point, if the whole or part of the battery is surrounded with a material having a rigidity of 20 newtons or more per square meter in terms of Young's modulus, it is possible to suppress a volumetric expansion of the planar central portion and also suppress the deterioration in the adhesion between electrodes. Moreover, if a solid electrolyte of a low vapor pressure is used and the internal pressure of the battery is reduced at the time of assembly, allowing the atmospheric pressure to press the planar central portion, it is possible to suppress the deterioration in the adhesion between electrodes. Upper and lower planar portions of the electrode container may be connected together through slits or pillars to enhance the rigidity of the battery container and thereby improve the adhesion between electrodes. Further, if a plate spring having warp is disposed within the battery container together with electrodes, allowing the plate spring to press the planar central portion of the battery, it is possible to improve the adhesion between electrodes.

An information terminal device, in which is mounted the thin battery described above, permits the use of a replacement battery superior in portability. Besides, if the information terminal device is provided with a liquid crystal display element or a pen input function, it becomes possible to reduce the volume occupied by the battery. This is advantageous to the reduction in thickness of the device body which is demanded in this type of information terminal devices. For mounting the battery, an insertion port for the battery is formed on the information terminal device side and the battery is pushed into the device through the insertion port, whereby terminals of the battery and terminals of the information terminal device are connected with each other and electric power is supplied to the device from the battery. This mechanism facilitates the replacement of the battery. At the time of battery replacement and when the battery of a decreased capacity is removed, in order that the contents of information stored in components other than a non-volatile recording medium in the information terminal device may not be reset, a secondary battery for back-up purpose, whose capacity is within 2 hours in terms of the device working time, should be incorporated in the information terminal device in addition to the replacement battery, whereby it becomes possible to effect the battery replacement without the contents of information being reset and while an application program is allowed to proceed. This is advantageous in handling. There may be used a mechanism for fixing a battery planar portion locally at several points with a pressure of not lower than the normal atmospheric pressure using, for example, rollers or fins which press the battery into the battery inserting portion. With this mechanism, it is possible to improve the adhesion between electrodes and prolong the service life of the battery.

The charger for charging the above thin battery is formed with an insertion port for receiving the battery. When the lithium secondary battery has been inserted to a predetermined depth, electrode terminals of the battery and terminals of the charger are connected with each other and charging starts automatically upon closing of the charger circuit. After a long-time use there arise a plurality of discharged batteries, but by fabricating the charger in accordance with a specification which permits simultaneous loading of at least two such thin batteries as described above, it becomes possible to effect the charging in an efficient manner. In this case, a charge control circuit is used so that even when plural such batteries are loaded into the charger, they can be controlled each individually and be charged simultaneously without giving rise to such a problem as overcharge. At the start of charging, the inserted battery is locked, and upon completion of charging, the battery is unlocked, then the charged battery is ejected by means of a spring or the like, whereby even in the event the charger should be reset for some reason or other, there no longer is any fear of the charging current flowing to the charged battery and causing overcharge. Thus, safety is ensured. Further, even when the above plural batteries are being charged at a time, it is easy to distinguish a charged battery from uncharged batteries, which charged battery can be taken out easily. Thus, the batteries are easy to handle.

Brief Description of Drawings

Fig. 1 is an explanatory view of a lithium secondary battery according to Embodiment 1 of the present invention.
Fig. 2 is an explanatory view of a lithium secondary battery according to Embodiment 2 of the present invention.
Fig. 3 is an explanatory view of a lithium secondary battery according to Embodiment 3 of the present invention.
Fig. 4 is an explanatory view of a lithium secondary battery according to Embodiment 5 of the present invention.
Fig. 5 is an explanatory view of a lithium secondary battery according to Embodiment 6 of the present invention.
Fig. 6 is an explanatory view of a lithium secondary battery according to Embodiment 7 of the present invention.
Fig. 7 is an explanatory view of a lithium secondary battery according to Embodiment 9 of the present invention.
Fig. 8 is an explanatory view of a lithium secondary battery according to Embodiment 9 of the present invention.
Fig. 9 is an explanatory view of a lithium secondary battery according to Embodiment 10 of the present invention.
Fig. 10 is an explanatory view of a lithium secondary battery according to Embodiment 11 of the present invention.
Fig. 11 is an explanatory view of a lithium secondary battery according to Embodiment 12 of the present invention.

Best Mode for Carrying Out the Invention

[Embodiment 1]

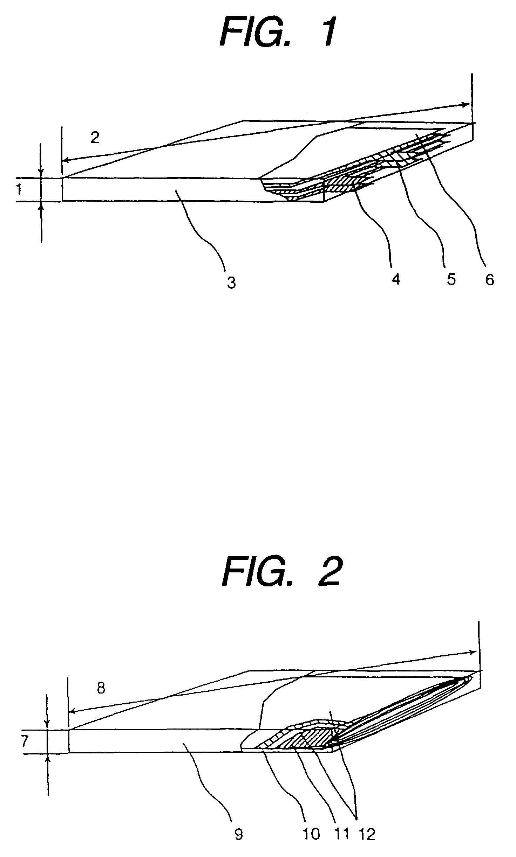

Fig. 1 illustrates an embodiment of the lithium secondary battery described in claims 1, 2, 3 and 5. In a battery container 3 having a thickness 1 of 4 mm and a diagonal length 2 of 130 mm, positive electrodes 4 formed by applying lithium nickelate having a weight capacity density of 150 Ah onto an aluminum foil using a binder and negative electrodes 5 formed by applying a highly crystallized graphite having a weight capacity density of 300 Ah onto a copper foil using a binder were laminated in an alternate manner through separators 6, and a solution of lithium hexafluorophosphate in ethylene carbonate and dimethyl carbonate, as an electrolyte, was poured into the battery container and then the container was sealed hermetically. There was obtained a discharge capacity of 8 Wh in the battery voltage range of 4.2V to 3.2V. The diagonal length 2 of a planar portion was 32.5 times as large as the thickness 1. In this connection, it is the lithium secondary battery described in claim 7 that uses an aluminum container obtained by deep drawing of aluminum as the battery container 3.

[Embodiment 2]

Fig. 2 illustrates an embodiment of the lithium secondary battery described in claims 1, 2, 4 and 6. In a battery container 9 having a thickness 7 of 4.5 mm and a diagonal length 8 of 130 mm, positive electrodes 10 formed by applying lithium manganate having a weight capacity density of 90Ah and a lithium:manganese:oxygen ratio of 1:2:4 onto an aluminum foil using a binder and negative electrodes 11 formed by applying a high-temperature treated product of a hard graphitizing carbon having a weight capacity density of 600 Ah onto a copper foil using a binder were wound alternately through separators 12, and a solution of lithium hexafluorophosphate in propylene carbonate and dimethoxyethane, as an electrolyte, was poured into the battery container and then the container was sealed hermetically. There was obtained a discharge capacity of 8 Wh in the battery voltage range of 4.2V to 3.2V. The diagonal length 8 of a planar portion was about 28.9 times as large as the thickness 7. It is the lithium secondary battery described in claim 8 that uses a plastic container as the battery container 9.

[Embodiment 3]

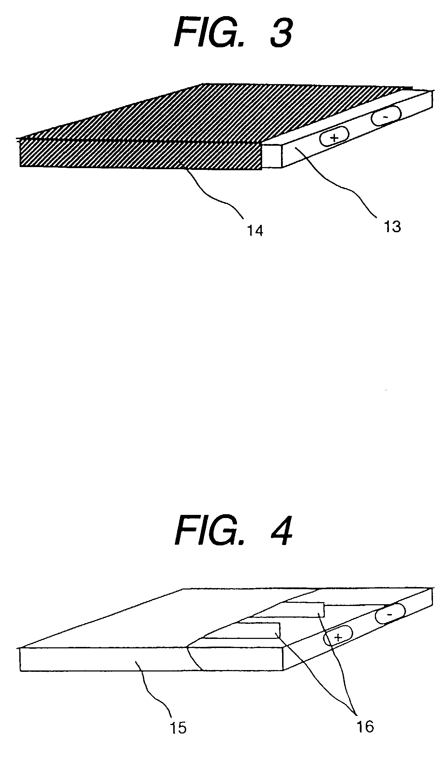

Fig. 3 illustrates an embodiment of the lithium secondary battery described in claim 9. In this battery, a battery container 13 is received in a case 14 of tungsten carbide having a Young's modulus of 53 newtons per square meter. Since the expansion of electrodes in the battery is suppressed and the adhesion between electrodes is ensured, the service life of the battery could be prolonged.

[Embodiment 4]

The lithium secondary battery described in claim 10 was fabricated by using a polymer electrolyte instead of the electrolyte-impregnated separators used in the lithium secondary battery of Embodiment 1, then exhausting the interior gas from a vacuum exhaust port formed in the battery container and then sealing the container. In this battery, the atmospheric pressure brings the electrodes into close contact with one another, whereby the service life of the battery could be prolonged.

[Embodiment 5]

Fig. 4 illustrates an embodiment of a battery container used in the lithium secondary battery described in claim 11. Slits 16 are formed in the interior of a battery container 15 to enhance the battery strength and suppress the expansion of the battery when used over a long period. Cut-in portions are formed in the electrodes at positions corresponding to the slits. The slits may be substituted by pillars or the like.

[Embodiment 6]

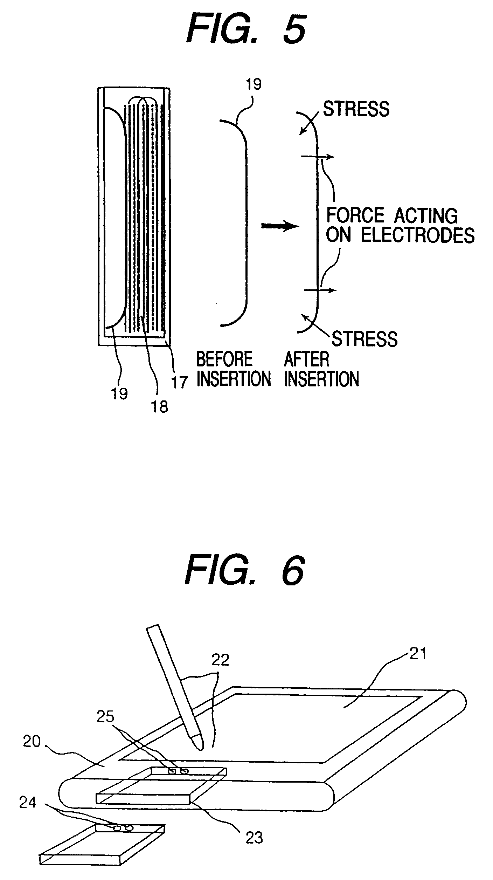

Fig. 5 illustrates an embodiment of a battery container used in the lithium secondary battery described in claim 12. An electrode group 18 comprising positive and negative electrodes and separators is placed in the interior of a battery container 17 and a nickel plate 19 having bent end portions is disposed deformedly in the interior of the container so as to hold the electrode group 18 between the nickel plate 19 and the container 17 and so that there remains a residual stress. The nickel plate 19, by virtue of its residual stress, presses the electrode group 18 to suppress the expansion of the electrode group and thereby ensures the adhesion between electrodes. It was possible to attain the prolongation of the battery life.

[Embodiment 7]

Fig. 6 illustrates an embodiment of the information terminal device described in claims 13, 14, 15 and 16. On a flat plate-like body 20 is formed a liquid crystal display 21, and a pen input element 22 is provided on the display. The device is provided with an insertion port 23 for the lithium secondary battery shown in Embodiment 1. Upon insertion of the lithium secondary battery into the device, battery terminals 24 and device terminals 25 are connected with each other.

[Embodiment 8]

According to the information terminal device described in claim 17, a lithium secondary battery of a small capacity is disposed within the device shown in Fig. 6, and when the capacity of the battery which has been inserted into the insertion port decreases, a display to that effect is made on the liquid crystal display, whereupon the power supply is switched over to the back-up battery by a power supply switching circuit. When the user replaces the battery in the insertion port 23 with a charged battery and the terminals 25 in the insertion port detect a sufficiently high voltage, the power supply is again switched over to the battery in the insertion port by the power supply switching circuit.

[Embodiment 9]

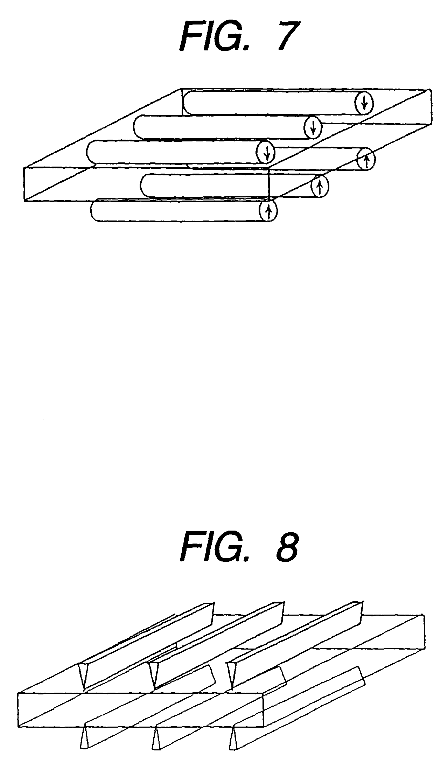

In the information terminal device described in claim 18, such rollers as shown in Fig. 7 or such fins as shown in Fig. 8 are provided in the insertion port of the information terminal device shown in Fig. 6 so as to permit a local application of pressure to the flat portion of the battery.

[Embodiment 10]

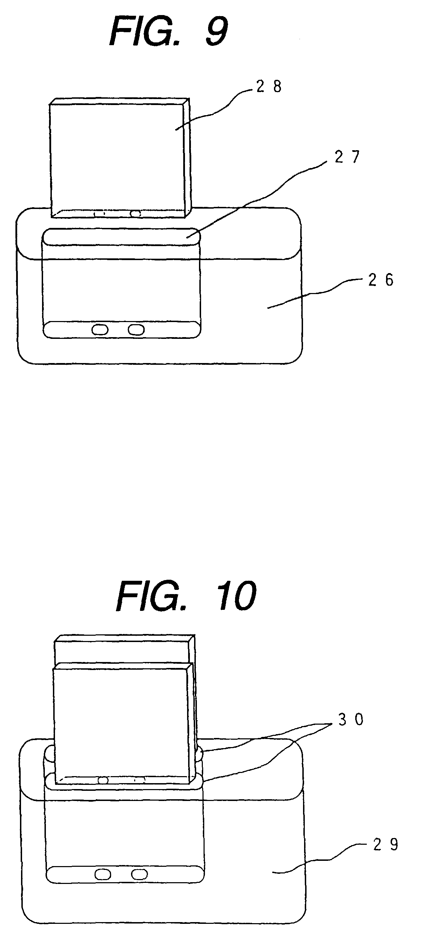

Fig. 9 illustrates the charger described in claim 19. The charger, indicated at 26, is provided with an insertion port 27 for insertion of a lithium secondary battery 28 therein. Upon insertion of the battery 28 to a predetermined depth, battery electrodes and charger electrodes come into contact with each other and charging is started.

[Embodiment 11]

Fig. 10 illustrates the charger described in claims 20 and 21. In the charger, indicated at 29, two insertion ports 30 for a lithium secondary battery are formed and battery voltages in the insertion ports are detected each individually. Further, an IC circuit for controlling both charging current and charging voltage is incorporated in the charger. With this construction, it is possible to charge two batteries at a time.

[Embodiment 12]

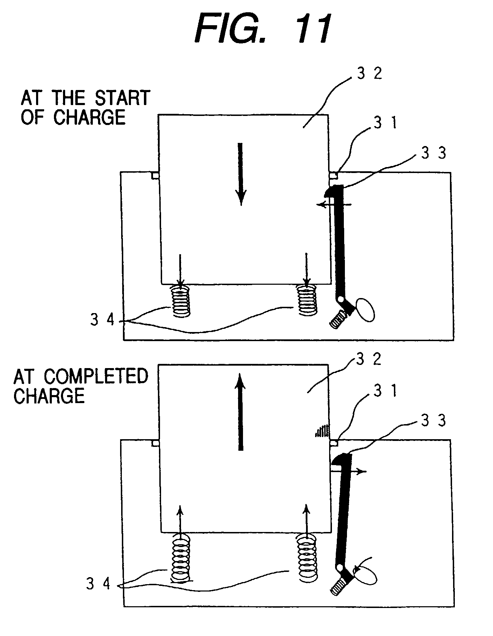

Fig. 11 illustrates the charger described in claim 22. When a lithium secondary battery 32 has been inserted into an insertion port 31 for the battery, a pawl 33 of the battery comes into engagement with a recess formed in the battery to lock the battery, while after the completion of charging, the pawl is disengaged from the recess and the battery is ejected from the insertion port by means of springs 34.

[Embodiment 13]

There was used an active material of positive electrode having a hexagonal system as a crystal structure, having a c-axis lattice constant of not larger than 1.421 nm and having a percent occupancy of lithium ions at the lithium site in the crystal lattice of not less than 95%. Into this active material of positive electrode was added an 8.0 wt% solution of polyvinylidene fluoride (PVDF) in N-methylpyrrolidone (NMP) as a binder and was further added 9.0 wt% of acetylene black as an electrically conductive material, followed by kneading. The resultant paste was applied onto a 20 $\mu$m thick aluminum foil, then dried and pressed to afford a positive electrode having an active material thickness of 72.5 $\mu$m and an active material density of 3.0 g/cm$^3$. Then, an electrolyte containing one mole equivalent of lithium hexafluorophosphate in a mixed solvent of ethylene carbonate (EC) and dimethyl carbonate (DMC) was impregnated into a 25 $\mu$m thick porous polyethylene film as a separator. The thus-impregnated separator was sandwiched in between the positive electrode and lithium metal and then subjected to a single electrode evaluation test. As a result, there were obtained weight capacity densities exceeding 180 Ah/kg and 160 Ah/kg in the charge/discharge potential ranges of 4.3V to 2.7V and 4.3V to 3.3V, respectively. Further, as described in Japanese Patent Application No. 7-15676, graphite powder was suspended in a silver nitrate solution and a reduction reaction was performed while a reducing agent was added, allowing fine silver particles of several ten nm to be deposited 10 wt% on graphite surface, followed by washing and drying, to which was then added an 8.0 wt% solution of polyvinylidene fluoride (PVDF) in N-methylpyrrolidone (NMP) as a binder, followed by kneading. The resultant paste was applied onto a 33 $\mu$m thick copper foil, then dried and pressed to afford a negative electrode having an active material thickness of 80 $\mu$m and an active material density of 1.5 g/cm$^3$. The negative electrode and lithium metal were laminated together through the foregoing 25 $\mu$m thick porous polyethylene film impregnated with the foregoing electrolyte, and a single electrode test was conducted. As a result, there was obtained a weight capacity density exceeding 350 Ah/kg in the charge/discharge potential range of 10 mV to 100 mV.
The active material of positive electrode and the binder were applied to both sides of a 20 $\mu$m aluminum foil over an area of 8.5 cm × 8.5 cm. Likewise, the active material of negative electrode and the binder were applied to both sides of a 33 $\mu$m thick copper foil over an area of 8.5 cm × 8.5 cm. Seven such coated aluminum foils and eight such coated copper foils were then laminated in an alternate manner while sandwiching in between adjacent foils a 25 $\mu$m thick polyethylene separator having an area of 8.7 cm × 8.7 cm. Then, to both outer sides of the resulting laminate are laminated positive electrodes which have been applied to only one foil sides respectively. This lamination is performed in such manner that the positive electrodes-applied surfaces face toward negative electrodes. Further, the separators are laminated to the outer sides of both outer positive electrodes to obtain the following laminated structure, in which the separator, the positive electrode and the negative electrode are assumed to be S, C and A, respectively:

S/C(one side)/(S/A/S/C repeated seven times)S/A/S/C (one side)/S

The total thickness of the separators and electrodes was 2.93 cm. The amount of the active material of positive electrode is 20 g and that of the active material of negative electrode is 12.5 g. In terms of weight capacity density, the active material of negative electrode is about twice as large as the active material of positive electrode. When this point is taken into account, the amount of the negative electrodes is too large. This is because consideration is given to a lithium deposition reaction on the negative electrode side in the event of overcharge. The above electrodes are accommodated in a square battery container made of aluminum and having external dimensions of 9 cm × 9.5 cm × 0.4 cm and a wall thickness of 0.05 cm. Clearances are 0.4 cm, 0.9 cm and 0.07 cm in the directions of width, height and thickness, respectively.

Industrial Applicability

As set forth above, when a flat plate-like battery having a thickness of 5 mm, a diagonal length of 100 to 130 mm, and having a discharge capacity of 8 Wh or more in the battery voltage range of 4.2V to 3.2V, namely, a flat battery whose diagonal length is twenty times or more as large as the thickness thereof, is used as a power supply for an information terminal device, it becomes possible to reduce the thickness and weight of the device and improve the portability and operability of the battery in its use for replacement. If aluminum or a plastic material is used as the material of the battery container, the weight of the battery is further reduced. If the battery container is enclosed with a material having a Young's modulus of 20 newtons or more per square meter, or if a solid electrolyte is used to reduce the internal pressure of the battery container, or if the upper and lower flat plate portions of the battery container are partially connected with each other, or if a spring is mounted in the interior of the battery container, the spring having a residual stress to push the electrodes perpendicularly to a planar portion of the battery, the adhesion between electrodes is enhanced and the battery life is prolonged. This effect is obtained also by holding the battery planar portion and applying pressure locally thereto on the information terminal device side. In the charger, by forming a plurality of insertion ports and controlling the charge of batteries in the insertion ports each independently, it becomes possible effect charging efficiently. Further, the mechanism for ejecting a charged battery automatically is effective in preventing overcharge and improving operability.

## Claims

1. A lithium secondary battery as a non-aqueous secondary battery accommodating positive and negative electrodes and separators therein, said positive and negative electrodes being capable of occluding and releasing lithium ions, and with an electrolyte containing lithium ions having been poured into the battery, or using a solid electrolyte containing lithium, said lithium secondary battery having a discharge capacity of 8 Wh or more in the battery voltage range of 4.2V to 3.2V and having a battery container, said battery container having a flat plate-like external shape and having, as external dimensions, a thickness of not larger than 5 mm and a diagonal length in the range of 100 mm to 130 mm.

2. A lithium secondary battery as a non-aqueous secondary battery accommodating positive and negative electrodes and separators therein, said positive and negative electrodes being capable of occluding and releasing lithium ions, and with an electrolyte containing lithium ions having been poured into the battery, or using a solid electrolyte containing lithium, said lithium secondary battery having a discharge capacity of 8 Wh or more in the battery voltage range of 4.2V to 3.2V and having a battery container, said battery container having a flat plate-like external shape and having, as external dimensions, a thickness of not larger than 5 mm and a diagonal length in the range of 100 mm to 130 mm, said negative electrodes containing as an active material a carbon material with fine metallic particles carried thereon which carbon material can occlude and release lithium ions.

3. A lithium secondary battery as a non-aqueous secondary battery accommodating positive and negative electrodes and separators therein, said positive and negative electrodes being capable of occluding and releasing lithium ions, and with an electrolyte containing lithium ions having been poured into the battery, or using a solid electrolyte containing lithium, said lithium secondary battery having a discharge capacity of 8 Wh or more in the battery voltage range of 4.2V to 3.2V and having a battery container, said battery container having a flat plate-like external shape and having a diagonal length of a planar portion thereof of twenty times or more as large as the thickness thereof in its external dimensions.

4. A lithium secondary battery as a non-aqueous secondary battery accommodating positive and negative electrodes and separators therein, said positive and negative electrodes being capable of occluding and releasing lithium ions, and with an electrolyte containing lithium ions having been poured into the battery, or using a solid electrolyte containing lithium, said lithium secondary battery having a discharge capacity of 8 Wh or more in the battery voltage range of 4.2V to 3.2V and having a battery container, said battery container having a flat plate-like external shape and having a diagonal length of a planar portion thereof of twenty times or more as large as the thickness thereof in its external dimensions, and said negative electrodes containing as an active material a carbon material with fine metallic particles carried thereon which carbon material can occlude and release lithium ions.

5. A lithium secondary battery according to any one of claims 1 to 4, wherein said positive and negative electrodes are accommodated in an alternately laminated state within said battery container.

6. A lithium secondary battery according to any one of claims 1 to 4, wherein said positive and negative electrodes are accommodated in a wound-up state within said battery container.

7. A lithium secondary battery according to any one of claims 1 to 6, using, as an active material of the positive electrodes, a material containing a nickel or cobalt compound and having a weight capacity density of 150 Ah or more per kilogram, and using, as an active material of the negative electrodes, a material having a weight capacity density of 300 Ah or more per kilogram.

8. A lithium secondary battery according to any one of claims 1 to 6, using, as an active material of the positive electrodes, a material containing a manganese compound and having a weight capacity density of 90 Ah or more per kilogram, and using, as an active material of the negative electrodes, a material having a weight capacity density of 600 Ah or more per kilogram.

9. A lithium secondary battery according to any one of claims 1 to 8, wherein aluminum or an alloy thereof is used as the material of said battery container containing the electrodes.

10. A lithium secondary battery according to any one of claims 1 to 8, wherein a plastic material is used as the material of said battery container containing the electrodes.

11. A lithium secondary battery according to any one of claims 1 to 10, wherein the whole or a part of the surface of said battery container is enclosed with a material having a Young's modulus of 20 newtons or more per square meter.

12. A lithium secondary battery according to any one of claims 1 to 11, wherein said solid electrolyte is used and the internal pressure of said battery container is reduced.

13. A lithium secondary battery according to any one of claims 1 to 12, wherein two upper and lower planar portions of said battery container are partially connected with each other in addition to connections thereof at end portions.

14. A lithium secondary battery according to any one of claims 1 to 13, including a component mounted in said battery container, said component having a residual stress to push the electrodes in a direction perpendicular to a planar portion of the battery.

15. An information terminal device using the lithium secondary battery described in any one of claims 1 to 14.

16. An information terminal device according to claim 15, including a liquid crystal display.

17. An information terminal device according to claim 15, having a pen input function.

18. An information terminal device including a battery loading portion, said battery loading portion having an insertion port for receiving therein the lithium secondary battery described in any one of claims 1 to 14, and wherein when the battery is pushed into said insertion port up to a predetermined depth, battery-side terminals and device-side terminals are connected with each other.

19. An information terminal device according to any one of claims 15 to 18, incorporating therein a lithium secondary battery having a capacity of within 2 hours in terms of a device working time, separately from the lithium secondary battery described in any one of claims 1 to 14.

20. An information terminal device according to any one of claims 15 to 19, having means, in a receptacle portion for the lithium secondary battery described in any one of claims 1 to 14, which causes a pressure of 1 kg or more per square centimeter to be imposed on the whole surface or a part of a planar portion of the lithium secondary battery at the time of fixing the battery.

21. A charger having an insertion port for receiving therein the lithium secondary battery described in any one of claims 1 to 14 and having a mechanism which starts a charging operation automatically upon insertion of the lithium secondary battery into said insertion port up to a predetermined depth.

22. A charger which permits simultaneous loading therein of at least two said lithium secondary batteries described in any one of claims 1 to 14.

23. A charger according to claim 22, capable of charging a plurality of said lithium secondary batteries while controlling the batteries each individually.

24. A charger according to any one of claims 21 to 23, having a mechanism whereby when the lithium secondary battery is inserted into the insertion port before charging, it is locked, and upon completion of charging, the charged lithium secondary battery is ejected.

# FIG. 1

# FIG. 2

# FIG. 3

14    13

# FIG. 4

15    16

# FIG. 5

STRESS

FORCE ACTING ON ELECTRODES

STRESS

BEFORE INSERTION

AFTER INSERTION

# FIG. 6

FIG. 7

FIG. 8

# FIG. 9

# FIG. 10

## FIG. 11

AT THE START
OF CHARGE

3 2

3 1

3 3

3 4

AT COMPLETED
CHARGE

3 2

3 1

3 3

3 4

EP 0 957 526 A1

## INTERNATIONAL SEARCH REPORT

| International application No. |
|---|
| PCT/JP96/00759 |

**A. CLASSIFICATION OF SUBJECT MATTER**

Int. Cl$^6$ H01M10/40, 10/44, 10/46, 2/02, G06F15/02, 3/033, 1/26

According to International Patent Classification (IPC) or to both national classification and IPC

**B. FIELDS SEARCHED**

Minimum documentation searched (classification system followed by classification symbols)

Int. Cl$^6$ H01M10/38, 10/40, 10/44, 10/46, 10/04, 2/02, G06F15/02, 3/033, 1/26

Documentation searched other than minimum documentation to the extent that such documents are included in the fields searched

| | |
|---|---|
| Jitsuyo Shinan Koho | 1926 - 1996 |
| Kokai Jitsuyo Shinan Koho | 1971 - 1996 |
| Toroku Jitsuyo Shinan Koho | 1994 - 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 6-196148, A (Yuasa Corporation), July 15, 1994 (15. 07. 94)(Family: none) | 1 - 24 |
| Y | Japan Storage Battery Co., Ltd. "Update Practical Secondary Battery -Way of its Selection and Use-", November 10, 1995 (10. 11. 95), The Nikkan Kogyo Shimbun, Ltd., Pages 137 to 145, 259 to 264 | 1 - 24 |
| Y | JP, 4-184872, A (Sony Corporation), July 1, 1992 (01. 07. 92) & US, 5292601, A & EP, 486950, A | 1 - 24 |
| Y | JP, 6-187998, A (Canon, Inc.), July 8, 1994 (08. 07. 94) & EP, 602976, A | 5, 6, 10, 15 |
| Y | JP, 3-33960, U (Sanyo Electric Co., Ltd.), April 3, 1991 (03. 04. 91)(Family: none) | 9, 13 |

| [X] Further documents are listed in the continuation of Box C. | | [ ] See patent family annex. |
|---|---|---|

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| June 18, 1996 (18. 06. 96) | June 25, 1996 (25. 06. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

16

**INTERNATIONAL SEARCH REPORT**

International application No.

PCT/JP96/00759

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 1-186551, A (Seiko Denshi Buhin K.K.), July 26, 1989 (26. 07. 89)(Family: none) | 11 |
| Y | JP, 5-182649, A (Ricoh Co., Ltd.), July 23, 1993 (23. 07. 93)(Family: none) | 12, 15 |
| Y | JP, 2-119045, A (Shin-Kobe Electric Machinery Co., Ltd.), May 7, 1990 (07. 05. 90)(Family: none) | 14 |
| Y | JP, 7-49731, A (Toshiba Corp., Toshiba Computer Engineering K.K.), February 21, 1995 (21. 02. 95)(Family: none) | 15 - 20 |
| Y | JP, 2-259871, A (Amano Corp.), October 22, 1990 (22. 10. 90)(Family: none) | 16, 17 |
| Y | JP, 57-4163, U (Sanyo Electric Co., Ltd.), January 9, 1982 (09. 01. 82)(Family: none) | 18, 20 |
| Y | JP, 5-189096, A (Ricoh Co., Ltd.), July 30, 1993 (30. 07. 93)(Family: none) | 19 |
| Y | JP, 60-136471, A (Matsushita Electric Works, Ltd.), September 10, 1985 (10. 09. 85) & US, 4788587, A | 21, 24 |
| Y | JP, 4-155777, A (Akira Matsushita), May 28, 1992 (28. 05. 92)(Family: none) | 22, 23 |

Form PCT/ISA/210 (continuation of second sheet) (July 1992)